# EUROPÄISCHE PATENTANMELDUNG

(11) **EP 4 357 523 A2**
(43) Veröffentlichungstag der Anmeldung: **24.04.2024**
(21) Anmeldenummer: 23201889.5
(22) Anmeldetag: 05.10.2023
(51) Int. Cl.: E01B 3/30

(54) **KASTENSCHWELLE**

(30) Priorität: 20.10.2022 DE 102022127736
(71) Anmelder: SCHWIHAG AG, 8274 Tägerwilen (CH)
(72) Erfinder: BUDA, Roland, 78315 Radolfzell a. Bodensee (DE)
(74) Vertreter: Kross, Ulrich

(57) **Zusammenfassung**

Die Erfindung betrifft eine Kasten- bzw. Hohlschwelle für den Einsatz in Eisenbahngleisen, mit einem Korpus mit wenigstens einer oberen Auflagefläche für Schienen sowie einem sich über die gesamte Länge der Kasten- bzw. Hohlschwelle er-streckenden und von dem Korpus von zumindest drei Seiten umgebenen Hohlraum zur Aufnahme und ggf. Entnahme von Kabelquerungen und/oder Weichenantriebsmechanismen und/oder Ausrüstungen für die Gleis- oder Zugkontrolle und/oder von Messeinrichtungen und/oder Versorgungsleitungen, dadurch gekennzeichnet, dass der Korpus aus Beton gefertigt ist, vorzugsweise Beton mit einer zusätzlichen Armierung.

## Beschreibung

### 1. Gebiet der Erfindung:

Die Erfindung betrifft eine Kastenschwelle oder Hohlschwelle für Eisenbahngleise. Die heutzutage im Eisenbahngleisbau verwendeten Kastenschwellen bzw. Hohlschwellen dienen dazu, dass Kabel unterhalb der Gleise durch den Gleisbau hindurch verlegt werden können oder eine problemlose Montage des Gestänges eines Weichenantriebs oder spezieller messtechnischer Einrichtungen innerhalb der Kastenschwelle bzw. Hohlschwelle verlegt werden können, ohne dass hierfür Gleise abgebaut oder Kabel oder andere Vorrichtungen beim Einbau, Ausbau oder bei der Instandhaltung getrennt werden müssten.

Hierfür weisen Kastenschwellen oder Hohlschwellen für Eisenbahngleise einen Korpus auf, der einen Hohlraum zumindest von drei Seiten, vorzugsweise nach oben offen, umschließt, wobei die Oberseite oder die Oberseiten der Kasten- bzw. Hohlschwelle Auflageflächen für auf der Kasten- bzw. Hohlschwelle zu verschraubende Gleise aufweisen. Die Kastenschwellen müssen einen ausreichenden Hohlraum aufweisen für die Verlegung von Kabeln, im Falle der sogenannten Kabelschachtschwelle, oder für den Antriebsmechanismus eines Weichenantriebs, im Falle der sogenannten Verschlussschwelle oder für elektronische bzw. mechanische Ausrüstungen für die Kontrolle von Gleisinfrastruktur und rollendem Material (Zügen).

Die Kastenschwellen sind so ausgelegt, dass sie alle während des Betriebes vom Zug übertragene Kräfte unter allen Umweltbedingungen schadlos aufnehmen können. Die übliche Lebensdauer für diese Produkte beträgt mindestens 50 Jahre.

Die Schienen werden auf den Schwellen mittels Schienenbefestigungssystemen befestigt, die wiederum auf dem Schwellenkörper montiert sind. Dies alles ist hinlänglich aus der Praxis bekannt.

Üblicherweise weisen derartige Kasten- bzw. Hohlschwellen einen Querschnitt auf, der im Wesentlichen einer U-Form mit einer Grundfläche und sich von dieser Grundfläche nach oben verstärkenden Schenkeln umfasst. Auf der Oberseite dieser Schenkel wiederum sind üblicherweise die oben genannten Auflageflächen für Montage von Schienen angeordnet. In diesem Bereich können gegebenenfalls Abweichungen von der U-Form der Kasten- bzw. Hohlschwelle vorliegen, insbesondere um die Auflageflächen größer auszugestalten als die Grundform der Seitenschenkel.

Hierdurch wird eine problemlose Montage sowohl des Gestänges des Weichenantriebs oder spezieller messtechnischer Einrichtungen oder die Durchführung von Kabeln, Versorgungsleitungen oder dergleichen ermöglicht. Derartige Kasten- bzw. Hohlschwellen sind im Gleisbau weit verbreitet.

Die aus dem Stand der Technik bekannten Kasten- bzw. Hohlschwellen werden üblicherweise aus Gusseisen oder Stahl gefertigt, somit entweder im Gießverfahren urgeformt oder als Schweiß- oder Schmiedekonstruktion vorgesehen. Die Herstellung derartiger Kasten- bzw. Hohlschwellen ist demzufolge zeitaufwändig und kostenintensiv.

### 2. Aufgabe der Erfindung:

Es war daher eine Aufgabe der Erfindung, eine Hohlschwelle bzw. Kastenschwelle zur Verfügung zu stellen, die bei zumindest gleichbleibender mechanischer Belastbarkeit gegenüber herkömmlichen Kasten- bzw. Hohlschwellen einfacher und leichter sowie kostengünstiger herzustellen ist.

Diese Aufgabe wird im erfindungsgemäßen Sinne mit einer Kasten- bzw. Hohlschwelle, umfassend die Merkmale des Anspruchs 1, gelöst. Vorteilhafte Ausgestaltungen der Erfindung sind insbesondere in den abhängigen Ansprüchen definiert.

### 3. Zusammenfassung der Erfindung:

Erfindungsgemäß wird eine Kasten- bzw. Hohlschwelle für den Einsatz in Eisenbahngleisen zur Verfügung gestellt, mit einem Korpus mit wenigstens einer oberen Auflagefläche für Schienen, vorzugsweise zwei oberen Auflageflächen für jeweils eine Schiene, sowie einem sich über die gesamte Länge der Kasten- bzw.

Hohlschwelle erstreckenden und von dem Korpus zumindest an drei Seiten umgebenen Hohlraum zur Aufnahme und gegebenenfalls Entnahme von Kabelquerungen und/oder Weichenantriebsmechanismen und/oder Ausrüstungen für die Gleis- oder Zugkontrolle und/oder von Messeinrichtungen und/oder Versorgungsleitungen. Der Korpus ist erfindungsgemäß aus Beton gefertigt, vorzugsweise Beton mit einer zusätzlichen Armierung.

Hierdurch wird eine Kasten- bzw. Hohlschwelle zur Verfügung gestellt, die in der Lage ist, alle während des Betriebs vom Zug übertragenen Kräfte unter allen Umweltbedingungen schadlos aufnehmen zu können und dabei auch die Anforderungen für die Lebensdauer dieser Produkte zu gewährleisten. Es wird eine Kasten- bzw. Hohlschwelle zur Verfügung gestellt, die wegen des einfachen Herstellungsverfahrens, einer kalten Fertigung, im Gegensatz zur energiereichen und aufwändigen Gusseisenfertigung bzw. Schweiß- und Schmiedetechnik erlaubt, eine Vielzahl von offenen Kastenformen herzustellen. Überdies wird ermöglicht, dass mögliche elektromagnetische Induktionseffekte wie bei einer Stahlschwelle und bei Durchführung von Starkstromkabeln durch die erfindungsgemäße Betonschwelle reduziert oder ganz unterbunden werden. Zudem erlaubt die erfindungsgemäße Kasten- bzw. Hohlschwelle erstmals auch die Verwendung von Kunststoffdübeln oder Standardbetonankern zur Befestigung des Schienenauflagers.

Es wird bevorzugt, wenn die erfindungsgemäße Kasten- bzw. Hohlschwelle aus einem durchgehenden Gusskörper besteht, der in einem einzelnen Fertigungsschritt durch Gießen von Beton in eine Form, vorzugsweise in eine Form mit vorab eingebrachter Armierung, herstellbar ist. Eine solche Fertigung umfasst vorzugsweise auch von Anbeginn die Ausbildung der gegebenenfalls verstärkten Auflageflächen für Schienenbefestigungssysteme und/oder das Vorsehen von Löchern zur Aufnahme von Dübeln und/oder die Einbettung von Stahlgewinden bereits während des Herstellungsprozesses der Kasten- bzw. Hohlschwelle.

Bevorzugt wird, wenn die Geometrie der Kasten- bzw. Hohlschwelle über ihre gesamte Länge im Wesentlichen gleich gestaltet ist. Die Länge der Kasten- bzw. Hohlschwelle überspannt zumindest den normierten Abstand zweiter von der Kasten- bzw. Hohlschwelle getragenen Schienen, wobei der Hohlraum sich, wie oben bereits erwähnt, über die gesamte Länge der Kasten- bzw. Hohlschwelle erstrecken muss, um den für den Hohlraum vorgesehenen Zweck zu erfüllen. Auch wenn Auflageflächen für die Schienen im oberen Bereich der Kasten- bzw. Hohlschwelle gegebenenfalls breiter als die oberen Kanten einer beispielsweise U-förmigen Kasten- bzw. Hohlschwelle ausgebildet sein mögen, stellt dies kein Abweichen von dem erfindungsgemäßen im Wesentlichen gleichgestalteten Querschnitt oder der gleichgestalteten Geometrie der Kasten- bzw. Hohlschwelle dar. Bevorzugt wird, wenn der Querschnitt des Korpus eine U-Form mit einer Grundfläche sowie sich zu beiden Seiten von der Grundfläche nach oben erstreckenden Schenkeln aufweist. Die Begriffe "oben" oder "unten" oder "Grund" beziehen sich hierbei erfindungsgemäß auf den Betriebseinsatz, bei dem die Grundfläche oder Auflagefläche einer Kasten- bzw. Hohlschwelle auf dem Gleisbett oder einer Festen Fahrbahn aufliegt und sich die von der Grundfläche aus erstreckenden Schenkel von dem Gleisbett aus in Richtung auf die aufzuliegenden Schienen erstrecken.

Bevorzugt wird, wenn die Schenkel diese U-Form eine gleiche Höhe aufweisen, um somit sicherzustellen, dass ein sicheres und horizontales Verlegen von Gleisen auf der Kasten- bzw. Hohlschwelle ermöglicht ist.

Ebenso wird bevorzugt, wenn die Schenkel sich unter Ausbildung eines rechten Winkels (+/- 5°) von der Grundfläche nach oben erstrecken. Hierdurch wird ein besonders einfacher und einfach zu fertigender Aufbau eines Korpus für eine Kasten- bzw. Hohlschwelle zur Verfügung gestellt, wobei die erfindungsgemäße Fertigungsweise und die erfindungsgemäß für die Herstellung der Kasten- bzw. Hohlschwelle verwendeten Materialien prinzipiell jede Querschnittsform oder Querschnittsvariante und zudem auch jede als sinnvoll erachtete Formgebung für die Schienenauflageflächen je nach Einsatzzweck oder Wunsch des Kunden erlauben.

Bevorzugt wird erfindungsgemäß, wenn der für die Herstellung der Kasten- bzw. Hohlschwelle verwendete Beton ein hochfester Beton, ein Glasfaserbeton, ein Kohlefaserbeton oder ein Keramikfaserbeton, bevorzugt eine Mischung von wenigstens zwei dieser Betons, ist. Hierdurch wird ein Material oder eine Materialmischung zur Verfügung gestellt, die besonders geeignet sind, mit leicht verfügbaren Materialien jede gewünschte mechanische Eigenschaft und Lebensdauer, auch unter definierten Umgebungsbedingungen, einzustellen.

Besonders bevorzugt wird überdies, wenn die Armierung, die in den Beton eingebettet ist, Glasfasergewebe und/oder Kohlefasergewebe und/oder Keramikfasergewebe umfasst. Hierdurch wird eine Möglichkeit geschaffen, mit leichten und leicht verfügbaren sowie verarbeitbaren Materialien die gewünschten mechanischen Eigenschaften der Kasten- bzw. Hohlschwelle nahezu beliebig zu verbessern und einzustellen.

In einer weiteren bevorzugten Ausführungsform der Erfindung weist die Armierung Kohlefaserstäbe und/oder Glasfaserstäbe und/oder Keramikfaserstäbe und/oder Stahlstäbe auf, die in einer besonders bevorzugten Ausführungsform der Erfindung vorgespannt in dem Beton des Korpus eingebettet sind. Hierdurch wird eine Möglichkeit geschaffen, eine besonders widerstandsfähige und dauerhaft betreibbare Kasten- bzw. Hohlschwelle mit leicht beherrschbaren und auf dem Markt verfügbaren Materialien herzustellen.

Bevorzugt wird ebenso eine Kasten- bzw. Hohlschwelle, die dadurch gekennzeichnet ist, dass die Armierung Kohlefasertextilien umfasst, besonders bevorzugt eine Kombination aus Kohlefasertextilien und insbesondere vorgespannten Kohlefaserstäben. Derartige Materialkombinationen sind gegenüber den bisher verwendeten metallischen Werkstoffen leichter und leicht zu verarbeiten und bieten darüber hinaus eine mindestens vergleichbare mechanische Stabilität und Festigkeit in Verbindung mit dem erfindungsgemäß verwendeten Beton.

Es wird erfindungsgemäß ebenso bevorzugt, wenn der Korpus einseitig außen, vorzugsweise unterhalb der Grundfläche, eine Schwellenbesohlung aus elastischem Material aufweist. Diese Schwellenbesohlung kann während des Herstellungsprozesses für die erfindungsgemäße Kasten- bzw. Hohlschwelle von vornherein mit vorgesehen sein oder aber mit handelsüblichen Mitteln leicht am Korpus der Kasten- bzw. Hohlschwelle angebracht werden, um die notwendige Abfederung und Erhöhung des Querverschiebewiderstandes der Kasten- bzw. Hohlschwelle gegenüber dem Gleisbett unter Last zu bewirken.

Es wird überdies bevorzugt, wenn Sensoren, vorzugsweise Sensoren für die Gleisüberwachung und/oder für die Überwachung des Materialzustands der Kasten- bzw. Hohlschwelle mit dem Korpus verbunden, vorzugsweise in den Korpus eingebettet sind. Die kalte Fertigung der Kasten- bzw. Hohlschwelle erlaubt gegenüber den Warmfertigungen gemäß dem Stand der Technik erstmals die Einbettung handelsüblicher Sensoren, wodurch eine Kasten- bzw. Hohlschwelle erhalten wird, die vielfach einsetzbar und leicht überwachbar ist.

Aufgrund des Umstands, dass das Material der Kasten- bzw. Hohlschwelle gemäß der Erfindung gegenüber metallischen Werkstoffen, wie sie aus dem Stand der Technik bekannt sind, nur gering oder elektrisch nichtleitend ist, kann die erfindungsgemäße Kasten- bzw. Hohlschwelle im Bereich der Auflageflächen für Schienen ohne zusätzliche elektrische Isolierung verwendet werden, wobei ein unerwünschter Stromfluss zwischen zwei mit der Kasten- bzw. Hohlschwelle verbundenen Schienen zu unterbleibt.

Schließlich wird erfindungsgemäß auch ein System aus einer Kasten- bzw. Hohlschwelle und einem Gleisbau, vorzugsweise umfassend zwei parallel verlaufende und mit einer Kasten- bzw. Hohlschwelle gemäß der Erfindung an den oberen Auflageflächen lösbar verbundenen Schienen, zur Verfügung gestellt. Mit dem erfindungsgemäßen System werden die gleichen technischen Effekte und Vorteile erreicht wie mit der erfindungsgemäßen Kasten- bzw. Hohlschwelle gemäß dem ersten Aspekt der Erfindung.

### 4. Kurze Beschreibung der Figuren

Die Erfindung wird nachfolgend unter Bezugnahme auf drei Figuren näher erläutert, in denen bevorzugte Ausführungsformen der Erfindung gezeigt sind.
- Figur 1a: zeigt den Stand der Technik von Kastenschwellen aus Stahl- bzw. Gusskonstruktionen hier am Beispiel der Schwihag-Kabelschachtschwelle mit in deren Hohlraum verlaufenden Starkstrom kabeln
- Figur 1b: zeigt die erfindungsgemäße Hohlschwelle aus mit Carbontextilgewebe und Kohlefaserstäben bewehrtem Beton
- Figur 2a: zeigt einen Querschnitt durch eine erfindungsgemäße Kasten- bzw. Hohlraumschwelle
- Figur 2b: zeigt eine perspektivische Ansicht einer erfindungsgemäßen Kastenbzw. Hohlraumschwelle, und
- Figur 3: zeigt eine Vielzahl von Querschnittsvarianten und Varianten für Schienenauflageflächen

### 5. Detaillierte Beschreibung der Ausführungsformen

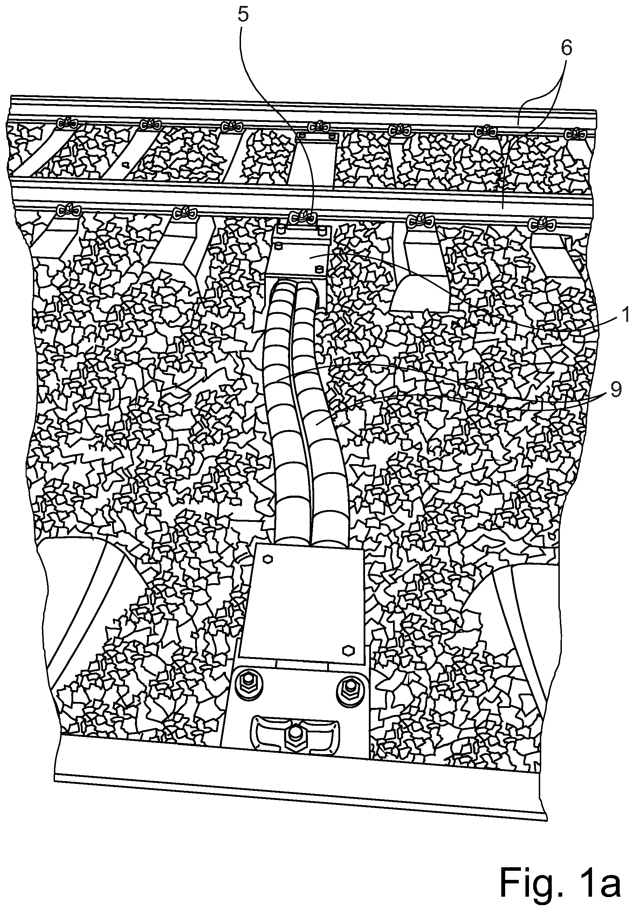

Figur 1a zeigt zwei Kasten- bzw. Hohlschwellen 1 nach dem Stand der Technik, welche für die Kabelquerung von zwei Starkstromkabeln 9 in einem Doppelgleis eingesetzt sind. Die Schienen 6 der Gleise sind jeweils auf den Kabelschachtschwellen bzw. Hohlschwellen 1 mittels Schienenbefestigungen 5 befestigt.

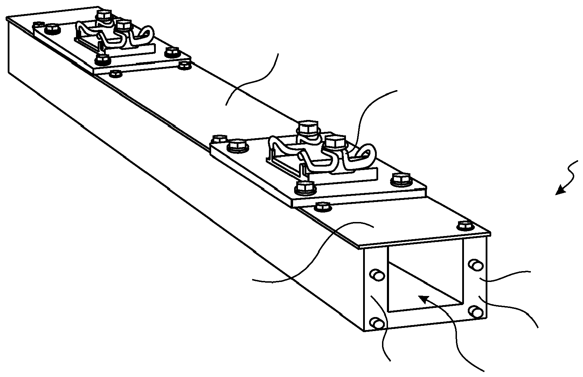

Figur 1b zeigt die erfindungsgemäße Kastenschwelle 1 mit einem im Wesentlichen U-förmigen Korpus 2 und einem von dem Korpus 2 zu drei Seiten umgebenen Hohlraum 3. Auf den Oberseiten der Schenkel 4a), 4b) des Korpus 2 sind Schienenbefestigungssysteme 5 angeordnet, mit denen die Schienen 6, in der Figur 1a dargestellt, mit den Kasten- bzw. Hohlschwellen 1 verbunden sind. Die (nicht dargestellten) Kabel innerhalb der Hohlräume 3 können so im Hohlraum 3 angeordnet werden, dass sie nicht über die Schenkel 4a, 4b des Korpus 2 hinausragen. Ein Austausch der (nicht dargestellten) Kabel kann somit ohne Weiteres ohne Abbau der (nicht dargestellten) Schienen von den Kasten- bzw. Hohlschwellen 1 erfolgen. Nach dem Einlegen der (nicht dargestellten) Kabel können die Abdeckungen 8 und 7 aus Stahl oder Kunststoffmaterial mit dem Korpus 2 auf den Oberseiten der Schenkel 4a), 4b) verschraubt werden.

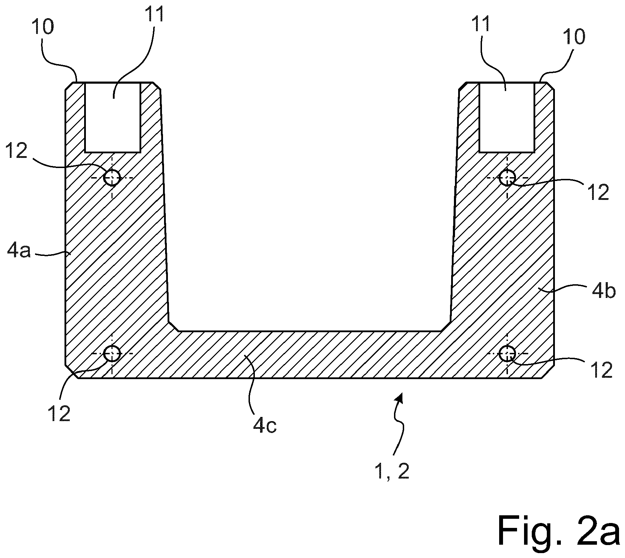

Figur 2a zeigt einen Querschnitt durch eine erfindungsgemäße Kasten- bzw. Hohlschwelle 1, deren Querschnitt im Wesentlichen einer U-Form mit einer Grundfläche 4c und zwei sich von der Grundfläche 4c nach oben erstreckenden Schenkeln 4a, 4b umfasst. An der Oberseite der Schenkel 4a, 4b sind Auflageflächen 10 für (nicht dargestellte) Schienenbefestigungssysteme und Schienen zu erkennen, mit während der Herstellung der Kasten- bzw. Hohlschwelle 1 vorgesehenen Hülsen 11 für die Aufnahme von (nicht dargestellten) Befestigungssystemen. In der Figur ist ebenfalls die Lage von vier Carbonstäben 12 gezeigt, die unter Vorspannung in den Betonkorpus 2 eingebettet sind, um hierdurch einen armierten Betonkorpus 2 zur Verfügung zu stellen.

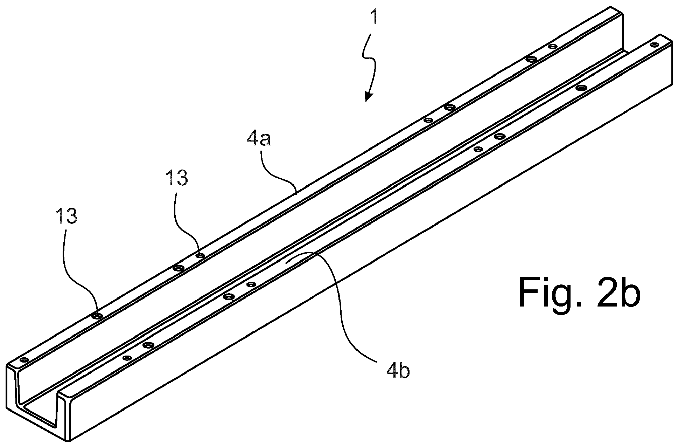

Figur 2b zeigt eine perspektivische Ansicht über eine erfindungsgemäße Kasten- bzw. Hohlschwelle 1, die in der gezeigten Ausführungsform eine Länge von 2,6m aufweist und an den Oberseiten der Schenkel 4a 4b jeweils 8 Bohrungen 13 aufweist, in die (nicht dargestellten) Befestigungsschrauben und/oder Dübel der (nicht dargestellten) Befestigungssysteme für (nicht dargestellte) Schienen eingebracht werden können.

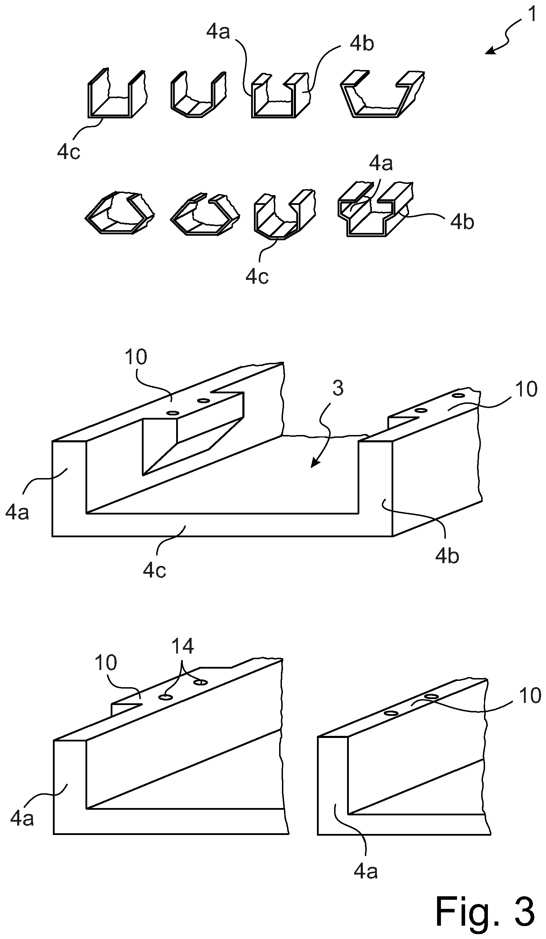

Figur 3 zeigt eine Reihe denkbarer Querschnittsvarianten für eine erfindungsgemäße Kasten- bzw. Hohlschwelle 1 aus Beton, welche sämtlich eine Grundfläche 4c sowie zwei Schenkel 4a, 4b aufweisen, die sich von dieser Grundfläche aus nach oben hin erstrecken und dort Auflageflächen 10 für (nicht dargestellte) Schienen und Schienenbefestigungssysteme aufweisen. Die Schenkel 4a, 4b und die Grundfläche 4c umschreiben einen Hohlraum 3, in dem Versorgungsleitungen oder dergleichen frei und ungehindert bewegt werden können.

Figur 3 zeigt überdiese auch Varianten im Bereich des Schienenauflagers 10, insbesondere eine erste Variante, bei der im oberen Bereich der Schenkel 4a eine Verbreiterung vorgesehen ist, die einstückig mit dem Schenkel 4a verbunden ist. Beide Auflageflächen 10 weisen überdies zwei Sacklöcher 14 auf, in die Gewindebuchsen oder Dübel für die Befestigung von (nicht dargestellten) Schienenbefestigungssystemen oder Schienen eingesetzt werden können. Die zweite Variante zeigt Auflageflächen 10, die sich von dem Schenkel 4a aus nach außen im Bereich der Auflagefläche 10 für (nicht dargestellte) Schienen befinden, um ebenso wie in der ersten Variante eine verbreiterte Auflagefläche 10 für (nicht dargestellte) Schienenbefestigungssysteme oder Schienen bereitzustellen. Die dritte Variante schließlich zeigt einen Ausschnitt aus einer im Wesentlichen U-förmigen Kasten- bzw. Hohlschwelle 1 mit in den dargestellten Schenkeln 4a, 4b eingesetzten Betonankern 14 mit Gewinde oder Dübeln.

### Bezugszeichenliste

- 1: Kasten- bzw. Hohlschwelle
- 2: Korpus
- 3: Hohlraum
- 4a, 4b: Schenkel
- 4c: Grundfläche
- 5: Schienenbefestigungssysteme
- 6: Schienen
- 7, 8: Abdeckungen
- 9: Kabel
- 10: Auflageflächen
- 11: Hülsen
- 12: Carbonstäbe
- 13: Bohrungen
- 14: Sacklöcher

## Patentansprüche

1. Kasten- bzw. Hohlschwelle (1) für den Einsatz in Eisenbahngleisen, mit einem Korpus (2) mit wenigstens einer oberen Auflagefläche (10) für Schienen sowie einem sich über die gesamte Länge der Kasten- bzw. Hohlschwelle (1) erstreckenden und von dem Korpus (2) von zumindest drei Seiten umgebenen Hohlraum (3) zur Aufnahme und ggf. Entnahme von Kabelquerungen und/oder Weichenantriebsmechanismen und/oder Ausrüstungen für die Gleis- oder Zugkontrolle und/oder von Messeinrichtungen und/oder Versorgungsleitungen, **dadurch gekennzeichnet, dass** der Korpus (2) aus Beton gefertigt ist, vorzugsweise Beton mit einer zusätzlichen Armierung.

2. Kasten- bzw. Hohlschwelle (1) nach Anspruch 1, **dadurch gekennzeichnet, dass** die Kasten- bzw. Hohlschwelle (1) aus einem durchgehenden Gusskörper besteht.

3. Kasten- bzw. Hohlschwelle (1) nach einem der Ansprüche 1 oder 2, **dadurch gekennzeichnet, dass** die Geometrie der Kasten- bzw. Hohlschwelle (1) über ihre gesamte Länge im Wesentlichen gleich gestaltet ist.

4. Kasten- bzw. Hohlschwelle (1) nach einem der voranstehenden Ansprüche, **dadurch gekennzeichnet, dass** der Querschnitt des Korpus (2) eine U-Form mit einer Grundfläche (4c) sowie sich zu beiden Seiten von der Grundfläche (4c) nach oben erstreckenden Schenkeln (4a, 4b) aufweist.

5. Kasten- bzw. Hohlschwelle (1) nach Anspruch 4, **dadurch gekennzeichnet, dass** die Schenkel (4a, 4b) eine gleiche Höhe aufweisen.

6. Kasten- bzw. Hohlschwelle (1) nach einem der Ansprüche 4 oder 5, **dadurch gekennzeichnet, dass** die Schenkel (4a, 4b) sich unter Ausbildung eines rechten Winkels von der Grundfläche (4c) nach oben erstrecken.

7. Kasten- bzw. Hohlschwelle (1) nach einem der vorangegangenen Ansprüche, **dadurch gekennzeichnet, dass** der Beton ein hochfester Beton, ein Glasfaserbeton, ein Kohlefaserbeton oder ein Keramikfaserbeton, vorzugsweise eine Mischung von wenigstens zwei dieser Betons, ist.

8. Kasten- bzw. Hohlschwelle (1) nach einem der vorangegangenen Ansprüche, **dadurch gekennzeichnet, dass** die Armierung Glasfasergewebe und/oder Kohlefasergewebe und/oder Keramikfasergewebe umfasst.

9. Kasten- bzw. Hohlschwelle (1) nach einem der vorangegangenen Ansprüche, **dadurch gekennzeichnet, dass** die Armierung Kohlefaserstäbe (12) und/oder Glasfaserstäbe und/oder Keramikfaserstäbe und/oder Stahlstäbe umfasst.

10. Kasten- bzw. Hohlschwelle (1) nach Anspruch 9, **dadurch gekennzeichnet, dass** die Stäbe (12) vorgespannt in den Beton des Korpus (2) eingebettet sind.

11. Kasten- bzw. Hohlschwelle (1) nach einem der vorangegangenen Ansprüche, **dadurch gekennzeichnet, dass** die Armierung Kohlefasertextilien, vorzugsweise eine Kombination aus Kohlefasertextilien und bevorzugt vorgespannten Kohlefaserstäben (12) umfasst.

12. Kasten- bzw. Hohlschwelle (1) nach einem der vorangegangenen Ansprüche, **dadurch gekennzeichnet, dass** der Korpus (2) einseitig außen, vorzugsweise unterhalb der Grundfläche (4c), eine Schwellenbesohlung aus elastischem Material aufweist.

13. Kasten- bzw. Hohlschwelle (1) nach einem der vorangegangenen Ansprüche, **dadurch gekennzeichnet, dass** Sensoren, vorzugsweise Sensoren für die Gleisüberwachung und/oder für die Überwachung des Materialzustands der Kasten- bzw. Hohlschwelle (1) mit dem Korpus (2) verbunden, vorzugsweise in den Korpus (2) eingebettet sind.

14. Kasten- bzw. Hohlschwelle (1) nach einem der vorangegangenen Ansprüche, **dadurch gekennzeichnet, dass** die Kasten- bzw. Hohlschwelle (1) im Bereich der Auflagefläche (10) für Schienen keine zusätzliche elektrische Isolierung aufweist.

15. System aus einer Kasten- bzw. Hohlschwelle (1) und einem Gleisbau, vorzugsweise umfassend zwei parallel verlaufende und mit einer Kasten- bzw. Hohlschwelle (1) gemäß einem der voranstehenden Ansprüche an den oberen Auflageflächen (10) lösbar verbundene Schienen.
